# EUROPÄISCHE PATENTSCHRIFT

(11) **EP 2 462 014 B1**
(45) Veröffentlichungstag und Bekanntmachung des Hinweises auf die Patenterteilung: **16.10.2013**
(21) Anmeldenummer: 10740618.3
(22) Anmeldetag: 03.08.2010
(51) Int. Cl.: B60T 15/14, G05G 1/04, H01H 21/22, B60T 15/04

(54) **FÜHRERBREMSHEBEL**
DRIVER BRAKE LEVER
LEVIER DE FREIN DE POSTE DE CONDUITE

(30) Priorität: 05.08.2009 DE 102009036146
(43) Veröffentlichungstag der Anmeldung: 13.06.2012
(73) Patentinhaber: KNORR-BREMSE Systeme für Schienenfahrzeuge GmbH, 80909 München (DE)
(72) Erfinder: MÜNCH, Lothar, 85649 Hofolding (DE)
(74) Vertreter: Schönmann, Kurt
(86) Internationale Anmeldenummer: PCT/EP2010/061279
(87) Internationale Veröffentlichungsnummer: WO 2011/015576

(56) Entgegenhaltungen:
- EP-A1- 1 279 578
- WO-A1-02/100681
- GB-A- 1 524 214

## Beschreibung

Die vorliegende Erfindung bezieht sich auf einen Führerbremshebel, der zum Bedienen eines Schienenfahrzeugs eingesetzt werden kann.

Ein Führerbremshebel wird zum Steuern eines Schienenfahrzeugs eingesetzt und kann ausgehend von einer Nullstellung in mehrere Schaltstellungen bewegt werden. Der Führerbremshebel kann einen Schalter aufweisen, über den ein Führerbremsventil betätigt werden kann. Über das Führerbremsventil kann wiederum eine Bremse des Schienenfahrzeugs angesteuert werden.

An die Betätigung des Führerbremsventils werden hohe Anforderungen in Bezug auf die Ausfallsicherheit gestellt. So muss gewährleistet sein, dass größer drei Millionen Betätigungen des Hebels fehlerfrei an eine Schnittstelle des Führerbremsventils übertragen werden.

Werden elektrische Anbindungen zur Betätigung des Führerbremsventils eingesetzt, so müssen diese spezielle Sicherheitsvorschriften erfüllen, um die geforderte Ausfallsicherheit zu gewährleisten. So muss eine Litze eines eingesetzten elektrischen Kabels einen vorbestimmten Mindestdurchmesser haben. Aufgrund des Mindestdurchmessers ist das Kabel sperrig und kann nur schwer gebogen werden. Eine Anbindung mit einem Kabel eignet sich somit nur dann, wenn keine Umlenkung bzw. Richtungsänderung erfolgt oder ein großer Biegeradius mit einem großen Platzbedarf möglich ist. Wird ein solches Kabel jedoch im Bereich des Führerbremshebels eingesetzt, so kann es in dem begrenzt zur Verfügung stehenden Bauraum kaum Ausgleichsbewegungen durchführen. Solche Ausgleichsbewegungen sind jedoch bei einer Bewegung des Führerbremshebels erforderlich, um ein Abreißen des Kabels zu verhindern. Zudem sind im Bereich des Führerbremshebels üblicherweise scharfkantige Bauteile verbaut, die eine Abschergefahr für das Kabel darstellen. Generell besteht durch die Bewegung des Führerbremshebels auch die Gefahr eines Einklemmens des Kabels. Daher wird eine Anbindung des Schalters am Führerbremshebel an die Schnittstelle des Führerbremsventils rein mechanisch über ein Gestänge realisiert.

GB 1 524 214 A beschreibt einen drehbaren Handbremshebel für ein Fahrzeug. Der Handbremshebel weist einen integrierten elektrischen Schalter auf.

Es ist die Aufgabe der vorliegenden Erfindung einen verbesserten Führerbremshebel zu schaffen. Diese Aufgabe wird durch einen Führerbremshebel gemäß Anspruch 1 gelöst.

Der vorliegenden Erfindung liegt die Erkenntnis zu Grunde, dass eine elektromechanische Anbindung eines Schalters am Führerbremshebel unter Gewährleistung der geforderten Ausfallsicherheit realisiert werden kann, wenn als elektrische Verbindung ein Flachbandleiter, beispielsweise in Form einer Flexleiterplatte, eingesetzt wird. Der Flachbandleiter stellt zum einen den geforderten Leiterquerschnitt bereit und ist zum anderen zwar in Richtung der Schmalseite steif dafür aber in Richtung der Breitseite flexibel. Somit kann der Flachbandleiter in einer gewünschten Richtung einen kleinen Biegeradius aufweisen und kann daher in dem kleinen Bauraum, der im Bereich des Führerbremshebels zur Verfügung steht, eingesetzt werden. Insbesondere kann ein, aufgrund der Bewegung des Führerbremshebels, erforderliches Spiel des Flachbandleiters durch das Vorsehen mindestens einer flexiblen Ausbuchtungen oder Biegung im Verlauf des Flachbandleiters sichergestellt werden. Vorteilhafterweise zeichnet sich eine Anbindung des Schalters über einen Flachbandleiter durch geringe Kosten und eine hohe Flexibilität aus.

Die vorliegende Erfindung schafft einen Führerbremshebel zum Bedienen eines Schienenfahrzeugs, mit folgenden Merkmalen: einer Befestigungseinrichtung, die ausgebildet ist, um eine Drehbewegung des Führerbremshebels in einer Bewegungsebene zu ermöglichen; mindestens einem Bedienschalter zum Bedienen eines Führerbremsventils, wobei der Bedienschalter im Bereich eines ersten Endes des Führerbremshebels angeordnet ist; und einem Flachbandleiter zum Bereitstellen einer elektrischen Verbindung zwischen dem mindestens einen Bedienschalter und einer, außerhalb des Führerbremshebels angeordneten Schnittstelle zu dem

Führerbremsventil, wobei der Flachbandleiter aus einem, dem ersten Ende gegenüberliegenden, zweiten Ende des Führerbremshebels herausgeführt ist.

Der Führerbremshebel kann in einem Führerstand des Schienenfahrzeugs angeordnet sein, und von einer Person bedient werden. Dabei kann der Führerbremshebel durch die Drehbewegung, um eine Drehachse der Befestigungseinrichtung, in eine Mehrzahl von Schaltstellungen gebracht werden. Zusätzlich kann durch eine Betätigung des mindestens einen Bedienschalters durch die Person, mindestens ein elektrisches Signal bereitgestellt werden und über den Flachbandleiter an die Schnittstelle zu dem Führerbremsventil übertragen werden. Die Schnittstelle kann beispielsweise auf einer benachbart zu dem Führerbremshebel angeordneten elektrischen Platine angeordnet sein. Der Bedienschalter kann beispielsweise als Druckschalter, Kippschalter oder Schiebeschalter ausgeführt sein und an einer geeigneten Position am Führerbremshebel angeordnet sein. Das elektrische Signal kann ausgebildet sein, um das Führerbremsventil direkt oder über eine Schaltung ansteuern, um beispielsweise ein Öffnen oder ein Schließen des Führerbremsventils zu bewirken. Der Flachbandleiter kann direkt mit dem Bedienschalter verbunden sein. Alternativ kann der Bedienschalter über eine weitere elektrische Leitung kontaktiert sein, die beispielsweise innerhalb des Führerbremshebels oder an dem zweiten Ende des Führerbremshebels an den Flachbandleiter anschließt. Der Flachbandleiter kann eine Mehrzahl von elektrischen Leitern aufweisen, die nebeneinander in einer Ebene angeordnet sind. Alternativ kann der Flachbandleiter einen breit und flach ausgebildeten Leiterstreifen aufweisen. Insbesondere kann der Flachbandleiter als Flexleiterplatte ausgeführt sein, bei der auf einem Trägermaterial Kupferleitungen aufgebracht sein können. Bei dem Trägermaterial kann es sich um eine Folie handeln, die beispielsweise eine Dicke von weniger als einem Millimeter aufweist. Die Kupferleitungen können auf das Trägermaterial aufgedampft sein. Ebenfalls ist eine Ausführung als Flachbandkabel möglich, sofern die geforderten Anforderungen erfüllt werden können.

Der Flachbandleiter kann über eine Breitseite des Flachbandleiters biegbar und über eine Schmalseite des Flachbandleiters biegesteif sein. Die Breitseite kann dabei eine Hauptfläche des Flachbandleiters und die Schmalseite eine schmale Randfläche des Flachbandleiters darstellen. Genauer gesagt, kann der Flachbandleiter zwei gegenüberliegende Breitseiten aufweisen, die zwischen zwei gegenüberliegenden Schmalseiten angeordnet sind. Der Flachbandleiter kann in Richtung jeder der beiden Breitseiten biegbar sein. Erfindungsgemäße kann der Flachbandleiter so angeordnet sein, dass die Drehbewegung des Führerbremshebels zu einer Biegung des Flachbandleiters
über die Breitseite führt. Eine solche Biegung kann aufgrund der Flexibilität des Flachbandleiters in dieser Richtung durchgeführt werden, ohne dass Verschleißerscheinungen oder gar Beschädigungen zu befürchten sind. Ferner kann durch ein gen oder gar Beschädigungen zu befürchten sind. Ferner kann durch ein Verhältnis von Breite zu Dicke des Flachbandleiters ein Bewegungsweg des Flachbandleiters genau definiert werden, da sich auftretende mechanische Kräfte nur in eine Richtung bewegen.

Um die Biegeeigenschaften des Flachbandleiters optimal nutzen zu können, kann der Flachbandleiter so aus dem Führerbremshebel herausgeführt sein, dass die Breitseite des Flachbandleiters senkrecht zu der Bewegungsebene ausgerichtet ist. Dabei führen geringfügige Abweichungen von der senkrechten Ausrichtung, beispielsweise aufgrund von Fertigungstoleranzen oder geringfügigen Verwindungen des Flachbandleiters,
typischerweise zu keiner Beeinträchtigung des erfindungsgemäß ausgenutzten Biegeverhaltens.

Vorteilhafterweise kann auch die Schnittstelle zu dem Führerbremsventil so angeordnet sein, das die Breitseite des Flachbandleiters im Bereich der Schnittstelle senkrecht zu der Bewegungsebene ausgerichtet ist. Somit kann der Flachbandleiter über seinen gesamten Verlauf senkrecht oder nahezu senkrecht zu der Bewegungsebene angeordnet sein.

Beispielsweise kann die Schnittstelle zu dem Führerbremsventil als Stecker ausgebildet sein. Dies erleichtert die Kontaktierung des Flachbandleiters. Dazu kann beispielsweise am Flachbandleiter eine erste Steckverbindung angeordnet sein, die in eine entsprechende Anschlusssteckverbindung eingesteckt werden kann, die beispielsweise auf einer Platine angeordnet ist. Alternativ können andere geeignete Kontaktierungsarten und Kontaktierungseinrichtungen eingesetzt werden.

Um genügend Spiel bei einer Bewegung des Führerbremshebels zu haben, kann die Länge des Flachbandleiters zwischen dem zweiten Ende des Führerbremshebels und der Schnittstelle zu dem Führerbremsventil mindestens doppelt so lang sein, wie ein minimaler Abstand zwischen dem zweiten Ende und der Schnittstelle. Der minimale Abstand kann sich beispielsweise einstellen, wenn sich der Führerbremshebel in einer Mittenstellung befindet. Alternativ sind auch andere Längenverhältnisse möglich, die ein ausreichendes Spiel ermöglichen.

Der Führerbremshebel kann, ausgehend von einer Nullstellung, die Drehbewegung sowohl im Uhrzeigersinn als auch gegen den Uhrzeigersinn ausführen. Somit ist der erfindungsgemäße Ansatz mit bekannten Führerbremshebeln kombinierbar.

Der Führerbremshebel kann an dem ersten Ende einen Hebelknopf aufweisen, und der Bedienschalter kann in oder an dem Hebelknopf angeordnet sein. Der Hebelknopf erleichtert die Bedienung des Führerbremshebels und die Betätigung des Bedienschalters.

Gemäß einer Ausführungsform kann der Flachbandleiter an zumindest einem Flachbandleiterende eine Lötverbindung oder eine Crimpverbindung aufweisen. Die Crimpverbindung kann durch crimpen hergestellt werden. Die entsprechende Verbindung kann eine elektrische und eine mechanische Kontaktierung des Flachbandleiters an den Bedienschalter oder die Schnittstelle ermöglichen.

Der Flachbandleiter kann als Flexleiterplatte ausgebildet sein. Eine solche Leiterplatte kann sowohl die erforderlichen Biegeeigenschaften als auch die hohen Qualitätsanforderungen in Bezug auf eine sichere Signalübertragung gewährleisten.

Gemäß einer Ausführungsform kann der Führerbremshebel an dem zweiten Ende mindestens ein scharfkantiges Bauteil aufweisen. Aufgrund der vorbestimmbaren Biegewege oder durch eine Fixierung des Flachbandleiters, kann gewährleistet werden, dass der Flachbandleiter nicht mit solch scharfkantigen Bauteilen in Berührung kommt. Somit ist keine zusätzliche Abschirmung entsprechender Bauteile erforderlich.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines Führerbremshebels, gemäß einem Ausführungsbeispiel der vorliegenden Erfindung;
- Fig. 2: eine weitere Darstellung eines erfindungsgemäßen Führerbremshebels;
- Fig. 3: eine weitere Darstellung eines erfindungsgemäßen Führerbremshebels;
- Fig. 4: eine weitere Darstellung eines erfindungsgemäßen Führerbremshebels;
- Fig. 5: eine weitere Darstellung eines erfindungsgemäßen Führerbremshebels; und
- Fig. 6: eine weitere Darstellung eines erfindungsgemäßen Führerbremshebels.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

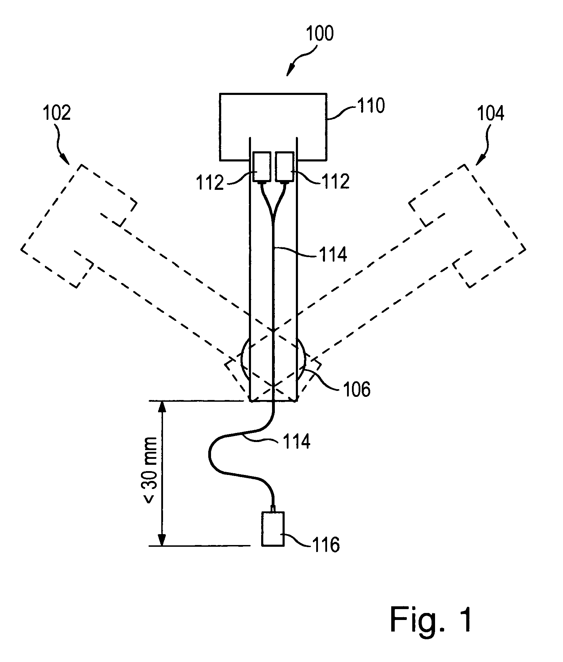

Fig. 1 zeigt eine schematische Darstellung eines Führerbremshebels 100, gemäß einem Ausführungsbeispiel der vorliegenden Erfindung. Der Führerbremshebel 100 kann ausgehend von einer Mittelstellung in einer Bewegungsebene in eine erste Stellung 102 und in eine zweite Stellung 104 bewegt werden. Dazu kann der Führerbremshebel 100 ein Drehgelenk 106 aufweisen. Die erste Stellung 102 kann in Bezug auf die Mittelstellung eine Auslenkung von +55° und die zweite Stellung 104 kann in Bezug auf die Mittelstellung eine Auslenkung von -55° aufweisen.

Der Führerbremshebel 100 kann an einem ersten Ende einen Hebelknopf 110 aufweisen. Im Bereich des ersten Endes kann mindestens ein Schalter 112 angeordnet sein. Gemäß diesem Ausführungsbeispiel sind zwei Schalter 112 nebeneinander angeordnet. Die Schalter 112 können gelötet bzw. gecrimpt sein und über einen Flachbandleiter in Form einer Flexleiterplatte 114, die in einem ersten Bereich innerhalb des Führerbremshebels 100 und in einem zweiten Bereich außerhalb des Führerbremshebels 100 verläuft, mit einer Schnittstelle in Form eines Übergabesteckers 116 oder eines Winkelsteckers verbunden sein. Die Flexleiterplatte 114 kann im Bereich der Schalter 112 in zwei Leiterabschnitte geteilt sein, die jeweils einen der Schalter 112 kontaktieren. In dem außerhalb des Führerbremshebels 100 angeordneten Bereich kann die Flexleiterplatte 114 mindestens eine Ausbuchtung aufweisen. Die Ausbuchtung ermöglicht eine Nachführung der Flexleiterplatte 114 bei einer Bewegung des Führerbremshebels 100 aus der Mittelstellung heraus. Dabei kann eine Bewegung des Führerbremshebels 100 um 110° sowie eine Absenkung von ca. 10mm ausgeglichen werden. Der Übergabestecker 116 kann auf einer Platine angeordnet sein. Gemäß diesem Ausführungsbeispiel ist der Übergabestecker 116 in diesem Ausführungsbeispiel ist der Übergabestecker 116 in einer gedachten Verlängerungslinie, unterhalb des sich in der Mittelstellung befindlichen Führerbremshebels 100 angeordnet. Ein Abstand zwischen dem Übergabestecker 116 und einem, dem Übergabestecker 116 zugewandten Ende des Führerbremshebels 100, ist gemäß diesem Ausführungsbeispiel kleiner als 30mm.

Dementsprechend kann eine Länge der Flexleiterplatte 114, außerhalb des Führerbremshebels 100, größer als 30mm sein.

Gemäß dem in Fig. 1 gezeigten Ausführungsbeispiel ist eine elektrische Anbindung von einem oder zwei Schaltern 112 im Hebelknopf 110 an eine elektrische Schnittstelle 116, bei einer Rotation von ±55° von der Nullstellung oder Mittenstellung des Hebels 100 realisiert. Ein Übergangsbereich einer Öffnung des Hebels 100, an der die Flexleiterplatte 114 aus dem Hebel 100 herausgeführt wird, kann mit scharfkantigen Bauteilen bestückt sein, wobei auch ein kleiner Bauraum, der kleiner als 30mm aufweisen kann, für die Anbindung vorhanden ist. Die gezeigte Anordnung ist für größer 3 Millionen Betätigungen ausgelegt.

Eine Anbindung am Schalter 112 sowie an der Übergabestelle 116 kann gelötet bzw. gecrimpt sein.

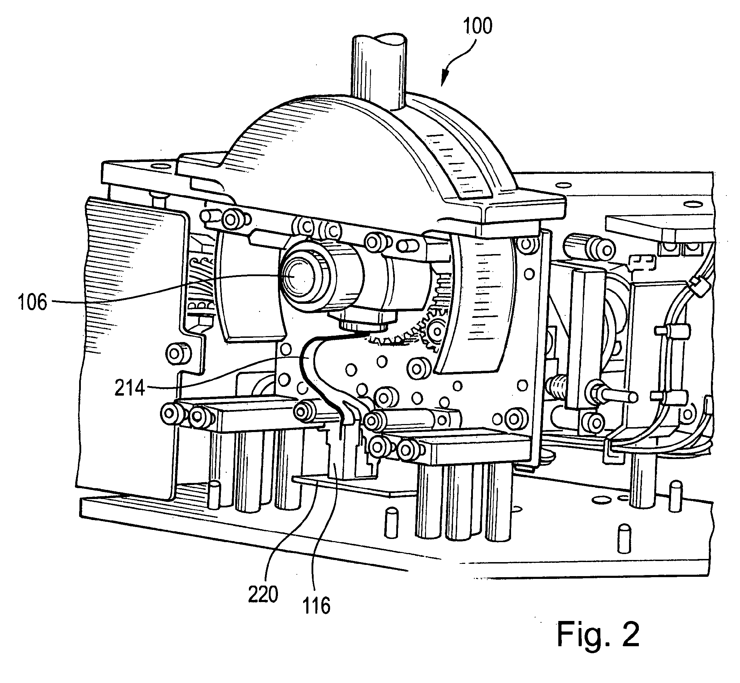

Fig. 2 zeigt eine schematische Darstellung eines Führerbremshebels 100, gemäß einem weiteren Ausführungsbeispiel der vorliegenden Erfindung. Gezeigt ist eine drehbare Lagerung des Führerbremshebels 100 über das Drehlager 106. Der Flachbandleiter 114 weist im Bereich des Übergabesteckers 116 eine Aufteilung in zwei Kabelabschnitte auf. Der Übergabestecker 116 ist auf einer elektrischen Platine 220 angeordnet. Eine Bewegung des Führerbremshebels 100 führt dazu, dass sich eine Austrittsstelle, an der den Flachbandleiter 114 aus dem Führerbremshebel 100 austritt, bzw. an der den Flachbandleiter 114 an dem Führerbremshebel 100 kontaktiert oder befestigt ist, von dem Übergabestecker 116 entfernt bzw. von dem Übergabestecker 116 wegschwenkt. Der sich dadurch vergrößernde Abstand zwischen dem Übergabestecker 116 und dem Führerbremshebels 100 kann durch eine Verkleinerung der Ausbuchtung des Flachbandleiters 114 ausgeglichen werden.

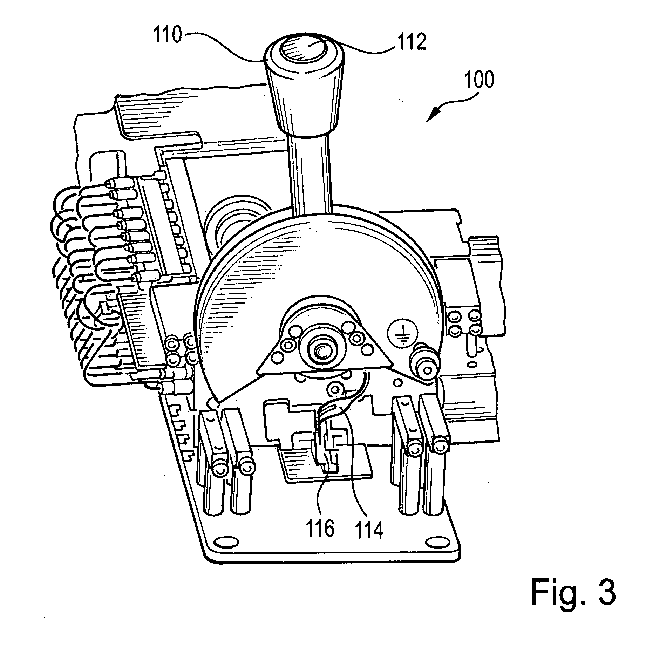

Fig. 3 zeigt eine schematische Darstellung eines Führerbremshebels 100, gemäß einem weiteren Ausführungsbeispiel der vorliegenden Erfindung. Gezeigt ist eine drehbare Lagerung des Führerbremshebels 100 mit dem Hebelknopf 110 sowie dem Flachbandleiter 114, das mit dem Übergabestecker 116 verbunden ist. Gemäß diesem Ausführungsbeispiel ist ein Schalter 112 mittig in einer Oberseite des Hebelknopfs 110 angeordnet. Hierbei kann es sich um einen Druckschalter 112 handeln. Alternativ kann der Schalter 112 oder mehrere Schalter 112 an anderen Positionen des Hebelknopfes 110 oder des Führerbremshebels 100 angeordnet sein.

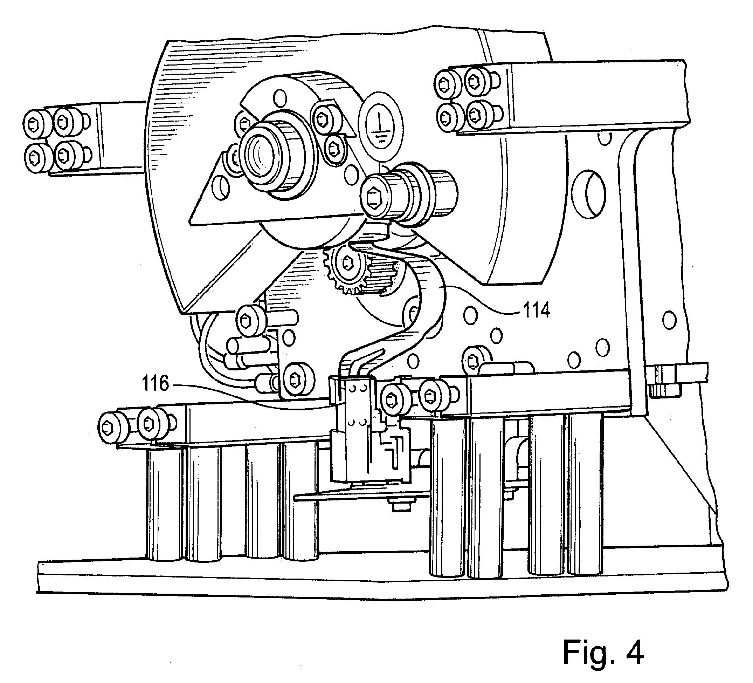

Fig. 4 zeigt eine schematische Darstellung eines Abschnitts des Führerbremshebels 100, gemäß einem weiteren Ausführungsbeispiel der vorliegenden Erfindung. Gezeigt ist eine drehbare Lagerung des Führerbremshebels 100 mit dem Flachbandleiter 114 und dem Übergabestecker 116.

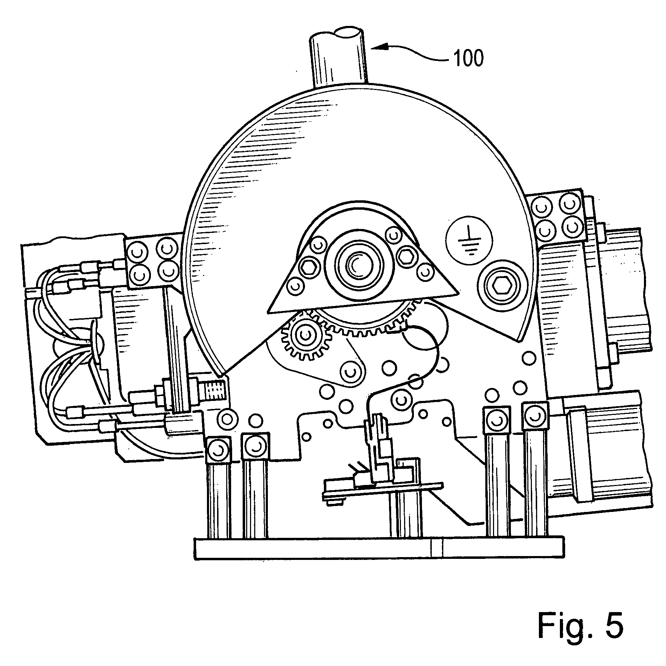

Fig. 5 zeigt eine schematische Darstellung eines des Führerbremshebels 100, gemäß einem weiteren Ausführungsbeispiel der vorliegenden Erfindung.

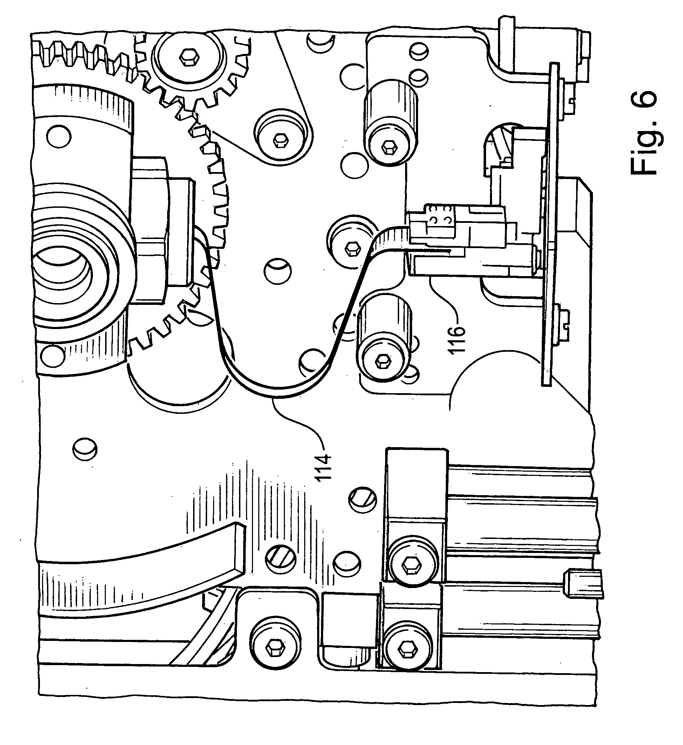

Fig. 6 zeigt eine schematische Darstellung eines Abschnitts des Führerbremshebels, gemäß einem weiteren Ausführungsbeispiel der vorliegenden Erfindung. Gezeigt ist eine Biegung des Flachbandleiters 114 zwischen einer Austrittstelle des Flachbandleiters 114 aus einem, hier unteren Ende des Führerbremshebels und dem Übergabestecker 116.

Die beschriebenen Ausführungsbeispiele sind nur beispielhaft gewählt und können miteinander kombiniert werden.

### Bezugszeichenliste

- 100: Führerbremshebel
- 102: erste Stellung
- 104: zweite Stellung
- 106: Drehgelenk
- 110: Hebelknopf
- 112: Schalter
- 114: Flexleiterplatte
- 116: Übergabestecker
- 220: Platine

## Patentansprüche

1. Führerbremshebel (100) zum Bedienen eines Schienenfahrzeugs, mit folgenden Merkmalen:
einer Befestigungseinrichtung (106), die ausgebildet ist, um eine Drehbewegung des Führerbremshebels in einer Bewegungsebene zu ermöglichen;
mindestens einem Bedienschalter (112) zum Bedienen eines Führerbremsventils, wobei der Bedienschalter im Bereich eines ersten Endes des Führerbremshebels angeordnet ist; **gekennzeichnet durch**
einen Flachbandleiter (114) zum Bereitstellen einer elektrischen Verbindung zwischen dem mindestens einen Bedienschalter und einer, außerhalb des Führerbremshebels angeordneten Schnittstelle (116) zu dem Führerbremsventil, wobei der Flachbandleiter aus einem, dem ersten Ende gegenüberliegenden, zweiten Ende des Führerbremshebels herausgeführt ist.

2. Führerbremshebel gemäß Anspruch 1, bei dem der Flachbandleiter (114) über eine Breitseite des Flachbandleiters biegbar und über eine Schmalseite des Flachbandleiters biegesteif ist, und bei der der Flachbandleiter so angeordnet ist, dass die Drehbewegung des Führerbremshebels (100) zu einer Biegung des Flachbandleiters über die Breitseite führt.

3. Führerbremshebel gemäß einem der vorangegangenen Ansprüche, bei dem der Flachbandleiter (114) so aus dem Führerbremshebel (100) herausgeführt ist, dass die Breitseite des Flachbandleiters senkrecht zu der Bewegungsebene ausgerichtet ist.

4. Führerbremshebel gemäß einem der vorangegangenen Ansprüche, bei dem die Schnittstelle (116) zu dem Führerbremsventil so angeordnet ist, das die Breitseite des Flachbandleiters (114) im Bereich der Schnittstelle senkrecht zu der Bewegungsebene ausgerichtet ist.

5. Führerbremshebel gemäß einem der vorangegangenen Ansprüche, bei dem die Schnittstelle zu dem Führerbremsventil als Stecker (112) ausgebildet ist.

6. Führerbremshebel gemäß einem der vorangegangenen Ansprüche, bei dem eine Länge des Flachbandleiters (114) zwischen dem zweiten Ende des Führerbremshebels (100) und der Schnittstelle (112) zu dem Führerbremsventil mindestens doppelt so lang ist, wie ein minimaler Abstand zwischen dem zweiten Ende und der Schnittstelle.

7. Führerbremshebel gemäß einem der vorangegangenen Ansprüche, bei dem der Führerbremshebel (100), ausgehend von einer Nullstellung, die Drehbewegung sowohl im Uhrzeigersinn als auch gegen den Uhrzeigersinn ausführen kann.

8. Führerbremshebel gemäß einem der vorangegangenen Ansprüche, bei dem der Führerbremshebel (100) an dem ersten Ende einen Hebelknopf (110) aufweist, und bei dem der Bedienschalter (112) in dem Hebelknopf angeordnet ist.

9. Führerbremshebel gemäß einem der vorangegangenen Ansprüche, bei dem der Flachbandleiter (114) an zumindest einem Flachbandleiterende eine Lötverbindung oder eine Crimpverbindung aufweist.

10. Führerbremshebel gemäß einem der vorangegangenen Ansprüche, bei dem der Flachbandleiter (114) als Flexleiterplatte ausgebildet ist.

11. Führerbremshebel gemäß einem der vorangegangenen Ansprüche, bei dem der Führerbremshebel (100) an dem zweiten Ende mindestens ein scharfkantiges Bauteil aufweist.

## Claims

1. Driver brake lever (100) for operating a rail vehicle, comprising the following features:
a fastening means (106) configured for permitting a rotational movement of the driver brake lever in a plane of movement;
at least one operating switch (112) for operating a driver brake valve, with said operating switch being disposed in the region of a first end of said driver brake lever; **characterized by**
a flat ribbon cable conductor (114) for providing an electrical connection between said at least one operating switch and an interface (116) with said driver brake valve, which is arranged externally of said driver brake lever, with said flat ribbon cable conductor being passed out from a second end of said driver brake lever, which is opposite to said first end.

2. Driver brake lever according to Claim 1, wherein said flat ribbon cable conductor (114) is bendable over one broad side of the flat ribbon cable conductor and rigid over a narrow side of said flat ribbon cable conductor, and wherein said flat ribbon cable conductor is so arranged that the rotational movement of said driver brake lever (100) results in bending of said flat ribbon cable conductor over the broad side.

3. Driver brake lever according to any of the preceding Claims, wherein said flat ribbon cable conductor (114) is passed out from said driver brake lever (100) in such a way that the broad side of said flat ribbon cable conductor is oriented orthogonally on the plane of movement.

4. Driver brake lever according to any of the preceding Claims, wherein said interface (116) with said driver brake valve is so disposed that the broad side of said flat ribbon cable conductor (114) is oriented orthogonally on the plane of movement in the region of said interface.

5. Driver brake lever according to any of the preceding Claims, wherein said interface with said driver brake valve is configured in the form of a plug connector (112).

6. Driver brake lever according to any of the preceding Claims, wherein a length of said flat ribbon cable conductor (114) between said second end of said driver brake lever (100) and said interface (112) with said driver brake valve corresponds at least to the double length of a minimum distance between the second end and said interface.

7. Driver brake lever according to any of the preceding Claims, wherein, starting out from a neutral position, said driver brake lever (100) may perform the rotational movement both in the clockwise and the counterclockwise directions.

8. Driver brake lever according to any of the preceding Claims, wherein said driver brake lever (100) comprises a control knob (110) on said first end, and wherein said operating switch (112) is disposed in said control knob.

9. Driver brake lever according to any of the preceding Claims, wherein said flat ribbon cable conductor (114) comprises a soldered connection or a crimped connection on at least one flat ribbon cable conductor end.

10. Driver brake lever according to any of the preceding Claims, wherein said flat ribbon cable conductor (114) is designed as flexible PC board.

11. Driver brake lever according to any of the preceding Claims, wherein said driver brake lever (100) comprises at least one sharp-edged component on said second end.

## Revendications

1. Levier de frein de poste de conduite (100) à commander un véhicule ferroviaire, comprenant les caractéristiques suivantes:
un moyen de fixation (106) conçu de façon à permettre un mouvement rotatoire du levier de frein de poste de conduite dans un plan de mouvement;
au moins un bouton de commande (112) à commander un robinet de frein du mécanicien, audit bouton de commande étant disposé dans la zone d'une première extrémité dudit levier de frein de poste de conduite; **caractérisé par**
un câble plat (114) à établir une connexion électrique entre ledit au moins un bouton de commande et une interface (116) avec ledit robinet de frein du mécanicien, qui est disposé à l'extérieur dudit levier de frein de poste de conduite, audit câble plat étant passé en dehors d'une deuxième extrémité dudit levier de frein de post de conduite, qui est opposée à ladite première extrémité.

2. Levier de frein de poste de conduite selon la revendication 1, dans lequel ledit câble plat (114) est flexible autour un côté large du câble plat et rigide autour un côté étroit dudit câble plat, et dans lequel ledit câble plat est disposé d'une telle manière que le mouvement rotatoire dudit levier de frein de poste de conduite (100) résulte en une flexion dudit câble plat autour du côté large.

3. Levier de frein de poste de conduite selon une quelconque des revendications précédentes, dans lequel ledit câble plat (114) est passé en dehors dudit levier de frein de poste de conduite (100) d'une telle manière, que le côté large dudit câble plat soit orienté en sens orthogonal sur la plan de mouvement.

4. Levier de frein de poste de conduite selon une quelconque des revendications précédentes, dans lequel ladite interface (116) avec ledit robinet de frein du mécanicien est disposé tellement, que le côté large dudit câble plat (114) soit orienté en sens orthogonal sur la plan du mouvement dans la zone dudit interface.

5. Levier de frein de poste de conduite selon une quelconque des revendications précédentes, dans lequel ladite interface avec ledit robinet de frein du mécanicien est configuré sous forme d une fiche (112).

6. Levier de frein de poste de conduite selon une quelconque des revendications précédentes, dans lequel une longueur dudit câble plat (114) entre ladite deuxième extrémité dudit levier de frein de poste de conduite (100) et ladite interface (112) avec ledit robinet de frein du mécanicien correspond au moins à la double longueur d'un écart minimal entre ladite deuxième extrémité et ladite interface.

7. Levier de frein de poste de conduite selon une quelconque des revendications précédentes, dans lequel, partant d'une position neutre, ledit levier de frein de poste de conduite (100) peut réaliser le mouvement rotatoire dans le sens horaire et également dans le sens contraire des aiguilles d'une montre.

8. Levier de frein de poste de conduite selon une quelconque des revendications précédentes, dans lequel ledit levier de frein de poste de conduite (100) comprend un bouton du levier (110) à ladite première extrémité, and dans lequel ledit bouton de commande (112) est disposé dans ledit bouton du levier.

9. Levier de frein de poste de conduite selon une quelconque des revendications précédentes, dans lequel ledit câble plat (114) comprend une liaison brasée ou une liaison par sertissage à au moins une extrémité dudit câble plat.

10. Levier de frein de poste de conduite selon une quelconque des revendications précédentes, dans lequel ledit câble plat (114) est conçu sous forme d'une carte flexible à circuits imprimés.

11. Levier de frein de poste de conduite selon une quelconque des revendications précédentes, dans lequel ledit levier de frein de poste de conduite (100) comprend au moins un composant à arête vive à ladite deuxième extrémité.
